(19) Europäisches Patentamt / European Patent Office / Office européen des brevets

(11) **EP 2 448 142 A2**

(12) **EUROPEAN PATENT APPLICATION**
published in accordance with Art. 153(4) EPC

(43) Date of publication:
**02.05.2012  Bulletin 2012/18**

(51) Int Cl.:
***H04B 7/04*** *(2006.01)*

(21) Application number: **10792351.8**

(22) Date of filing: **24.06.2010**

(86) International application number:
**PCT/KR2010/004124**

(87) International publication number:
**WO 2010/151069 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.06.2009   KR 20090056709**

(71) Applicant: **Pantech Co., Ltd.**
**Seoul 121-270 (KR)**

(72) Inventors:
• **SUH, Sung-jin**
**Seoul 121-270 (KR)**
• **PARK, Kyoungmin**
**Seoul, 121-270 (KR)**

(74) Representative: **Jordan, Volker Otto Wilhelm et al**
**Weickmann & Weickmann**
**Patentanwälte**
**Postfach 860 820**
**81635 München (DE)**

(54) **COORDINATED MULTIPOINT TRANSMITTING/RECEIVING METHOD USING ADAPTIVE CYCLIC DELAY DIVERSITY, SYSTEM SIDE APPARATUS AND RECEIVING APPARATUS USING SAME, AND METHOD FOR DETERMINING A COORDINATED BASE STATION SET**

(57)    Disclosed is a coordinated multi-point transmitting/receiving method using adaptive cyclic delay diversity, a system side apparatus and a receiving apparatus using the same, and a method for determining a coordinated base station set, which can cause a particular base station to have a good channel performance in a particular frequency band, which requires coordinated multipoint transmission/reception, by using adaptive cyclic delay diversity (CDD), so as to include the relevant base station in a coordinated base station set.

*FIG.8*

EP 2 448 142 A2

**Description**

Technical Field

The present invention relates to a coordinated multi-point transmitting/receiving method using adaptive cyclic delay diversity, a system side apparatus and a receiving apparatus using the same, and a method for determining a coordinated base station set. More particularly, the present invention relates to an apparatus and a method, which can cause a particular base station to have a good channel performance in a particular frequency band, which requires coordinated multi-point transmission/reception, by using adaptive cyclic delay diversity, so as to include the relevant base station in a coordinated base station set.

Background Art

In a coordinated multi-point transmission/reception system, when multiple base stations attempt to provide a coordinated transmission/reception service to a user, the multiple base stations allocate the same frequency resource at the same time point, and provide the coordinated transmission/reception service to the user by using the same frequency resource. At this time, the more base stations which can provide a coordinated service to a user there are, the higher the efficiency of data becomes.

This coordinated multi-point transmission/reception system has such a purpose that multiple base stations provide a high efficiency of data and a high-quality service to a user by using the same time resource and the same frequency resource. Therefore, the more base stations which can support the coordinated transmission/reception service to a user there are, the higher efficiency of data can be obtained, or the higher-quality service can be provided.

However, there is a limit on frequency resources which can be allocated to the user. Also, there may be a difference in channel conditions between base stations that any user experiences at an optional time. Accordingly, there is also a limit on the number of base stations which can support a coordinated service to any user.

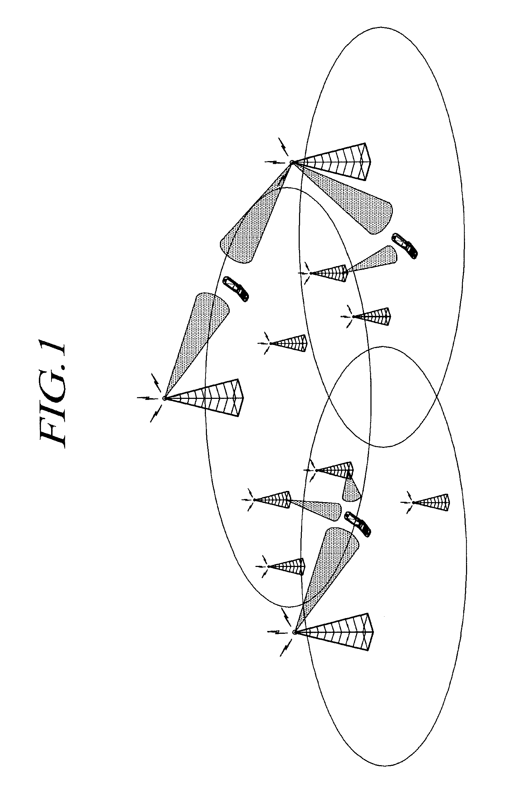

FIG. 1 is a view illustrating an overall configuration of a typical coordinated multi-point transmission/reception system.

A coordinated multi-point transmission/reception system developed from a conventional technology in which a user is connected to a base station and transmits/receives data to/from the base station, and has such a purpose that a user performs coordinated transmission/reception of data to/from one or more base stations, so that the user can obtain a higher efficiency of data and can receive a higher-quality service.

As illustrated in FIG. 1, a user may be simultaneously connected to two or more base stations, and may receive a service. Otherwise, the user may be connected to a base station, which has the best channel among multiple base stations according to channel conditions, by predetermined time periods, and may receive a service from the connected base station.

Also, when in performing beam forming or precoding, a beam forming value or a precoding value has been set in consideration of only channel conditions related to a base station already providing a service, the coordinated multi-point transmission/reception system makes it possible to estimate an estimation value or an interference value of channel conditions related to a near base station, and optimally set the beam forming value or the precoding value.

In the coordinated multi-point transmission/reception system as described above, when a base station transmits/receives coordinated data to/from a user equipment, the base station and the user equipment simultaneously are allocated the same frequency resource and transmit/receive the coordinated data between them. Namely, multiple base stations simultaneously selected as coordinated base stations transmit/receive data to/from a user by using the same frequency resource. Therefore, a base station selected as a coordinated base station must be a base station having a good channel performance in any usable frequency band with respect to the relevant user.

The user analyzes a reference signal transmitted by each base station, recognizes channel conditions for each antenna of each base station together with each base station, and directly or indirectly feeds the recognized information (i.e. the recognized channel conditions) back to a relevant base station.

The base station or an upper layer such as a core network, to which the recognized information has been fed back, selects base stations which show good channel performances and forms a coordinated base station set. Then, the base stations included in a coordinated base station set begin to perform coordinated transmission/reception between themselves and the relevant user equipment.

At this time, whether a sufficient number of base stations to enable the construction of a coordinated base station set is secured depends on channel conditions. When a coordinated base station set, which is equal to or more than a reference suitable for enabling coordinated transmission/reception, cannot be formed, or when a frequency band, which enables coordinated transmission/reception, is already pre-occupied by another user and cannot be used, there is a need for an optional operation for again receiving feedback information and again attempting coordinated transmission/reception or securing available frequency resources through scheduling of frequency resources.

As described above, the number of base stations which enables the construction of a sufficient coordinated set cannot be always secured according to channel conditions in the coordinated multi-point transmission/reception system. Conventionally, when a sufficient coordinated set is not constructed, feedback information may be again received from a user equipment and a coordinated set may be reconstructed, or a coordinated set, the state of which is not sufficient, may be constructed and a coordinated service may be started. At the worst, it may be required to solve problems in a method other than a coordinated transmission/reception service.

Also, even when a sufficient coordinated set can be constructed, there may occur a case where a selected frequency resource is already pre-occupied by another base station. In this case, available resources must be secured by scheduling, or it is required to wait until the use of the pre-occupied frequency resources is enabled.

Therefore, there has been a need for increasing the possibility of securing base stations which can be included in a coordinated set by improving the channel performance of a particular base station in a particular frequency band. Also, there has been a need for increasing the possibility of causing another frequency resource to be available without delay and enabling the start of the coordinated transmission/reception service even when another user has already pre-occupied a frequency resource which enables the coordinated transmission/reception service.

Disclosure

Technical Problem

Therefore, the present invention has been made in view of the above-mentioned problems, and the present invention provides a coordinated multi-point transmitting/receiving method, and a system side apparatus and a receiving apparatus, which perform an adaptive cyclic delay on a particular antenna in a multi-antenna system and cause a particular frequency band of a particular base station to be used as a frequency band for coordinated multi-point transmission/reception.

The present invention also provides a method for determining a coordinated base station set, which enable coordinated multi-point transmission/reception, among multiple base stations in consideration of an adaptive cyclic delay value, etc. for each base station, which have been transmitted by a receiving apparatus.

The present invention also provides a system side apparatus for coordinated multi-point transmission/reception which receives feedback information including an adaptive cyclic delay value and the like related to each base station from a receiving apparatus, determines a coordinated base station set in consideration of the received feedback information, and controls a base station, which requires a cyclic delay among base stations of the determined coordinated base station set, so as to transmit a signal delayed by a relevant cyclic delay value.

The present invention also provides a receiving apparatus for coordinated multi-point transmission/reception which first transmits feedback information including an adaptive cyclic delay value and the like related to each base station to a system side, and then receives a signal delayed by a relevant cyclic delay value from a particular base station which has been determined to be included in a coordinated base station set.

The present invention also provides a method by which in a Multi-Input Multi-Output (MIMO) antenna system, after a receiver calculates an adaptive cyclic delay value and feeds the calculated adaptive cyclic delay value back to a system side apparatus, the system side apparatus performs cyclic delay transmission based on the fed-back adaptive cyclic delay value and compensates for frequency attenuation in a desired frequency band, and thus includes a relevant base station in a coordinated base station set which enables a coordinated multi-point transmission/reception system to perform coordinated transmission/reception between itself and a particular user.

Technical solution

In order to accomplish the above-mentioned objects, in accordance with an aspect of the present invention, there is provided a coordinated multi-point transmission/reception system apparatus as a system apparatus including at least one base station including a multi-transmission antenna in a coordinated multi-point transmission/reception system, the coordinated multi-point transmission/reception system apparatus including: a first section for receiving information on a particular frequency band in which adaptive cyclic delay transmission of each base station enables compensation for frequency attenuation and, feedback information including information on an antenna to be delayed and an adaptive cyclic delay value, and channel response information on each base station from a receiving apparatus; a second section for determining a coordinated base station set, which enables coordinated multi-point transmission/reception between the coordinated base station set and the receiving apparatus, based on one or more of the feedback information and channel response information on each base station; and a third section for controlling the antenna to be delayed in only an optional base station, which requires the compensation for the frequency attenuation among base stations included in the coordinated base station set, so as to transmit a signal delayed by the adaptive cyclic delay value.

In accordance with another aspect of the present invention, there is provided a receiving apparatus for a coordinated multi-point transmission/reception system as a receiving apparatus communicating with multiple base stations including a multi-transmission antenna in the coordinated multi-point transmission/reception system, the receiving apparatus including: a feedback information processor for calculating information on a particular frequency band in which cyclic delay transmission of one or more base stations enables compensation for frequency attenuation and, feedback information including information on an antenna to be delayed and an adaptive cyclic delay value, and channel response information on each base station, and feeding the calculated information on the particular frequency band, feedback information, and channel response information back to the system side; and a transmission/reception unit for receiving a signal to be delayed by the adaptive cyclic delay value transmitted through an antenna to be delayed in a base station requiring the compensation for the frequency attenuation among base stations included in a coordinated base station set, which enable coordinated multi-point transmission/reception, determined by the system side.

In accordance with another aspect of the present invention, there is provided a coordinated multi-point transmitting/receiving method by a system in the system including multiple base stations including a multi-transmission antenna, the coordinated multi-point transmitting/receiving method including: receiving information on a particular frequency band in which adaptive cyclic delay transmission of one or more base stations enables compensation for frequency attenuation and, feedback information including information on an antenna to be delayed and an adaptive cyclic delay value, and channel response information on each base station from a receiving apparatus; determining a coordinated base station set, which enables coordinated multi-point transmission/reception, based on the channel response information and the feedback information; and controlling the antenna to be delayed in only a base station, which requires the compensation for the frequency attenuation among base stations included in the base station set, so as to transmit a signal delayed by the adaptive cyclic delay value.

In accordance with another aspect of the present invention, there is provided a coordinated multi-point transmitting/receiving method by a receiving apparatus in a system including multiple base stations including a multi-transmission antenna, the coordinated multi-point transmitting/receiving method including: calculating information on a particular frequency band in which cyclic delay transmission of one or more base stations enables compensation for frequency attenuation and, feedback information including information on an antenna to be delayed and an adaptive cyclic delay value, and channel response information on each base station, and feeding the calculated information on the particular frequency band, feedback information, and channel response information back to the system side; and receiving a signal to be delayed by the adaptive cyclic delay value transmitted through an antenna to be delayed in a base station requiring the compensation for the frequency attenuation among base stations included in a coordinated base station set, which enable coordinated multi-point transmission/reception, determined by the system side.

In accordance with another aspect of the present invention, there is provided a method for determining a coordinated multi-point base station set by a system side apparatus including multiple base stations including a multi-transmission antenna and communicating with a receiving apparatus, the method including: determining, by the system side, a coordinated base station set, which enables coordinated multi-point transmission/reception among the multiple base stations, in consideration of an adaptive cyclic delay value for each base station fed back from the receiving apparatus.

Brief Description of the Drawings

The foregoing and other objects, features and advantages of the present invention will become more apparent from the following detailed description when taken in conjunction with the accompanying drawings in which:

FIG. 1 is a view illustrating an overall configuration of a typical coordinated multi-point transmission/reception system;
FIG. 2 is a block diagram illustrating the configuration of a 3X1 multi-transmission/reception antenna (MIMO) system using a Cyclic Delay Diversity (CDD) technique;
FIG. 3 is a view illustrating the channel response characteristics of a multi-antenna (MIMO) system which does not use CDD;
FIG. 4 is a view illustrating channel response characteristics of a MIMO system using a large delay CDD;
FIG. 5 is a block diagram illustrating an overall configuration of a coordinated multi-point transmission/reception system according to an embodiment of the present invention;
FIG. 6 is a block diagram illustrating a detailed configuration of a base station (a transmitting apparatus), which enables delayed transmission, included in a coordinated multi-point transmission/reception system according to an embodiment of the present invention;
FIG. 7 is a block diagram illustrating the configuration of a receiving apparatus according to an embodiment of the present invention;
FIG. 8 is a flowchart illustrating a coordinated transmitting/receiving method using a coordinated multi-point transmission/reception system according to an embodiment of the present invention; and
FIG. 9 to FIG. 12 are views illustrating changes in channel response characteristics, respectively, when an embodiment of the present invention is applied to a multi-antenna system.

Best Mode

Mode for Invention

Hereinafter, exemplary embodiments of the present invention will be described in detail with reference to the accompanying drawings. It should be noted that in assigning reference numerals to elements in the drawings, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component (s). It should be understood that if it is described in the specification that one component is "connected," "coupled" or "joined" to another component, a third component may be "connected," "coupled," and "joined" between the first and second components, although the first component may be directly connected, coupled or joined to the second component.

When a signal is transmitted by using Multi-Input Multi-Output (MIMO) antennas, there arises a problem of showing a very low frequency response in a partial frequency band at a reception end. The problem reduces a bandwidth which a system can utilize and makes it difficult to effectively use resources and transmit information at high speed.

In order to solve these problems, various methods such as Cyclic Delay Diversity (CCD), etc. are considered.

A CDD which is a diversity technique used in an OFDM (Orthogonal Frequency Division Multiplexing)-based wireless communication system, etc., refers to a scheme for converting spatial diversity to frequency diversity in order to avoid interference between symbols.

In the CDD, when an OFDM system using multiple transmission antennas transmits a signal through a multi-path delay channel, a signal of each antenna is delayed by a cyclic delay value, and then the delayed signal is transmitted. When this delayed transmission increases the frequency selectivity of a channel, the CDD has a property which enables an improvement in coding gain through a channel coding technique.

Namely, in the CDD technique, when an N number of antennas transmit an identical signal, a first antenna transmits an original signal as it is, and a second antenna to an $N^{th}$ antenna improve the frequency selectivity of a channel by artificially generating a cyclic delay by using a predetermined delay value.

When the CDD is used, the CDD improves the overall frequency selectivity of a channel, and makes it possible to obtain a processing gain due to channel coding. However, the CDD does not improve a channel frequency response in a particular band, but can only increase the processing gain of channel coding all through the channel.

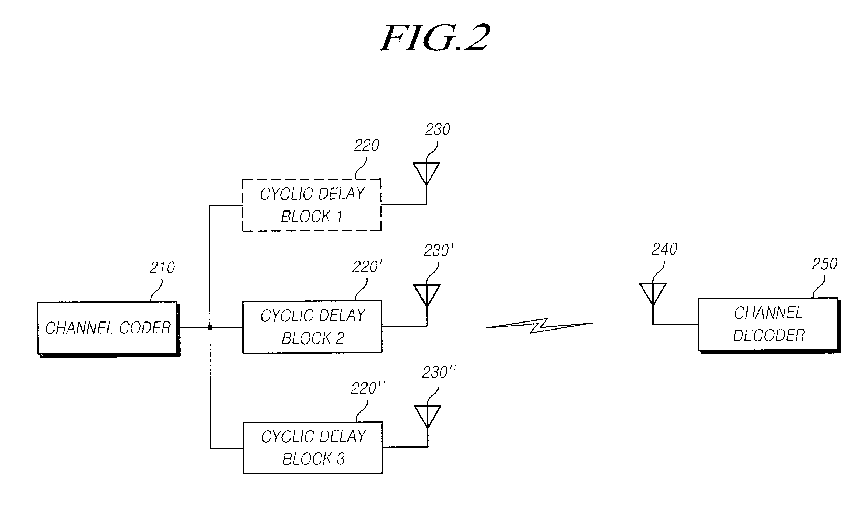

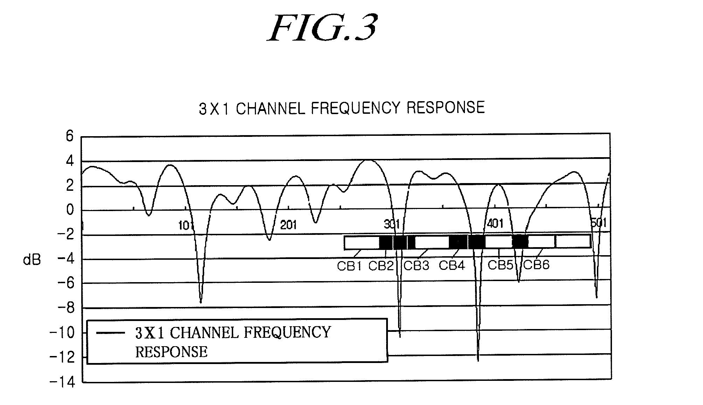

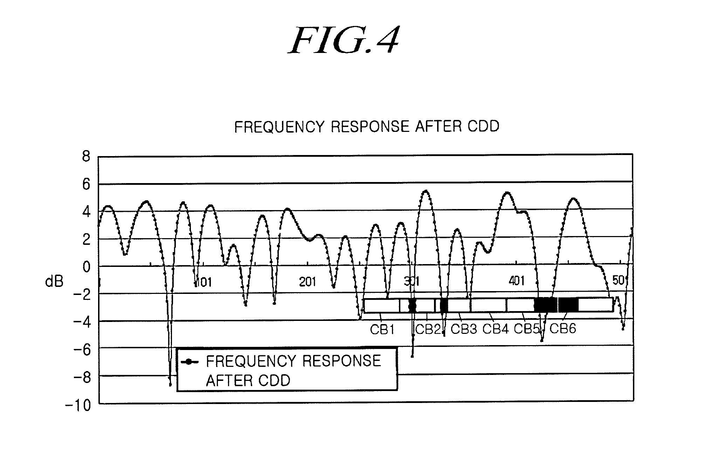

FIG. 2 is a block diagram illustrating the configuration of a 3X1 multi-transmission/reception antenna (MIMO) system using a Cyclic Delay Diversity (CDD) technique. FIG. 3 is a view illustrating the channel response characteristics of a multi-antenna (MIMO) system which does not use CDD. FIG. 4 is a view illustrating channel response characteristics when a large delay CDD is applied.

Referring to FIG. 2, a 3X1 CDD MIMO system includes a transmitter, which includes a channel coder 210, multiple cyclic delay blocks 220, 220' and 220", and multiple antennas 230, 230' and 230", and a receiver which includes an antenna 240 and a channel decoder 250.

For reference, in a typical CDD, delay is not applied to a first antenna, so that a cyclic delay block 220 connected to a first antenna 230 shown in FIG. 2 may be omitted.

As noted from FIG. 3 illustrating channel response characteristics of a signal transmitted without using the CDD in the 3X1 CDD MIMO system as illustrated in FIG. 2, it is impossible to recover information in multiple code blocks from the viewpoint of the Code Block (CB) for channel coding (i.e. when channel coding is performed on a code block-by-code block basis).

In FIG. 3, a heavily shaded part represents a part where information is corrupted due to a frequency selective fading phenomenon. A code block including a heavily shaded part and a white part represents a code block in which information is successfully recovered after channel coding although some of the information has been corrupted. Also, a code block including a heavily shaded part and a lightly shaded part represents a code block in which information fails to be recovered even after channel coding because much of the information is corrupted.

When the CDD is not used as shown in FIG. 3, there are code blocks, such as CB5, CB6, etc, in which information can be recovered after channel coding although information over some period has been corrupted. On the other hand, there are some code blocks, such as CB2 and CB4, in which large corrupted parts are included and thus information cannot be recovered at all. For reference, when there occurs frequency attenuation, the value of which is equal to or smaller than -2dB, it was assumed that information failed to be recovered.

In a large delay CDD, a large delay value corresponding to a sample value of tens to hundreds is set as a cyclic delay value. Then, the first antenna transmits the original signal as it is, the second antenna and the third antenna transmit the signal with a cyclic delay. The frequency response characteristics in the case of using a large delay CDD are as shown in FIG. 2B.

It is noted that a change in a channel response becomes larger when the large delay CDD is applied as shown in FIG. 4 than when the large delay CDD is not applied as shown in FIG. 3. Namely, the larger a cyclic delay value becomes, the larger the change in frequency selectivity becomes.

When the channel selectivity increases as shown in FIG. 4, the overall channel response is reduced. On the other hand, as the width of frequency attenuation becomes smaller, it is possible to obtain the gain of channel coding. Therefore, when the CDD is not applied (FIG. 3), even a code block in which a large frequency attenuation prevents information from being recovered by channel coding, has a higher probability of recovering information by channel coding as shown in FIG. 4 in a channel to which the large delay CDD applies frequency selectivity.

Namely, in FIG. 3, it is impossible to recover information in two code blocks CB2 and CB4. In contrast, it is impossible to recover information in only one code block CB6 in FIG. 4 where the large delay CDD is used. Accordingly, the probability of recovering information becomes larger (in the second code block, the third code block, and the fifth code block CB2, CB3 and CB5, some of information has been corrupted, but is recovered by channel coding).

When the large delay CDD is used as described above, the large delay CDD improves the overall frequency selectivity of a channel, and makes it possible to obtain processing gain due to channel coding. However, the large delay CDD does not improve a channel frequency response in a particular band, but can only increase the processing gain of channel coding over the entire channel. Therefore, the large delay CDD is a scheme having limits to some degree.

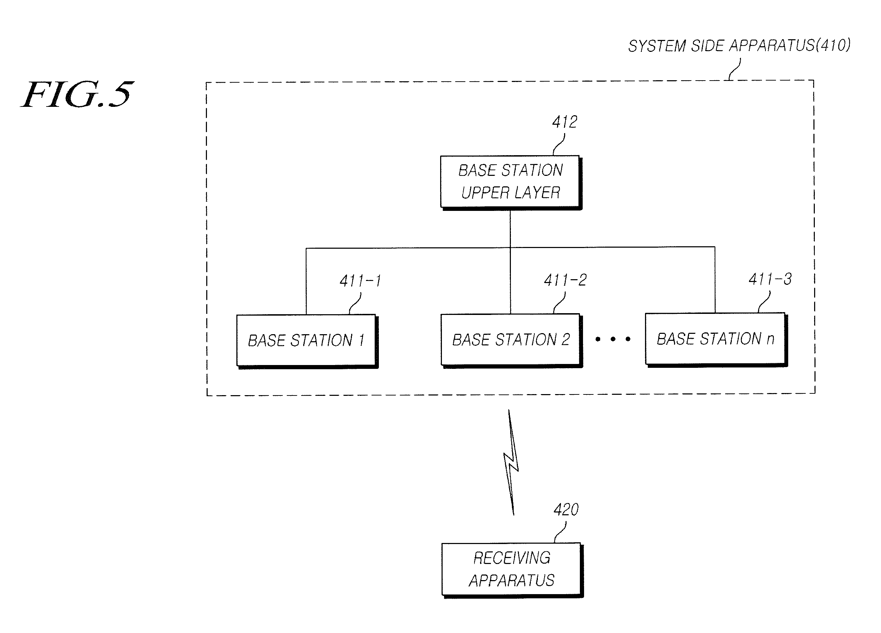

FIG. 5 is a block diagram illustrating an overall configuration of a coordinated multi-point transmission/reception system according to an embodiment of the present invention.

A coordinated multi-point transmission/reception system according to an embodiment of the present invention largely may include a system side apparatus 410 and a receiving apparatus 420. Specifically, the system side apparatus 410 may include multiple base stations 411-1 to 411-3, a base station upper layer 412, etc.

In this specification, the term "base station" refers to all types of wireless connection network devices connected to a User Equipment (UE) via an air interface, and has a comprehensive meaning including a node B, an eNode B, etc. as well as a typical base station according to a communication scheme or a communication standard.

In this specification, the base station upper layer 412 has a comprehensive concept including a core network, which includes a provider's network, an authentication center, a home location register and the like, or an RNC (Radio Network Controller), a BSC (Base Station Controller) and the like, which are wireless connection network devices connected to a base station.

The system side apparatus 410 determines a coordinated base station set which enables coordinated multi-point transmission/reception among multiple base stations in consideration of adaptive cyclic delay information for each base station, which has been fed back from the receiving apparatus 420, and performs coordinated multi-point transmission/reception between the relevant receiving apparatus and a base station.

More specifically, the system side apparatus 410 performs a first function of receiving information on a particular frequency band in which cyclic delay transmission of one or more base stations enables compensation for frequency attenuation, feedback information including information on an antenna to be delayed and an adaptive cyclic delay value, and channel response information on each base station from the relevant receiving apparatus; a second function of determining a coordinated base station set, which enables coordinated multi-point transmission/reception, based on one or more of the channel response information and the feedback information; and a third function of controlling the antenna to be delayed in only a base station, which requires the compensation for frequency attenuation among base stations included in the base station set, so as to transmit a signal delayed by the adaptive cyclic delay value.

Each of the first function to the third function may be performed by a section implemented by using a hardware module or a software module. According to circumstances, the first function to the third function may be performed by one element or may be cooperatively performed by multiple elements.

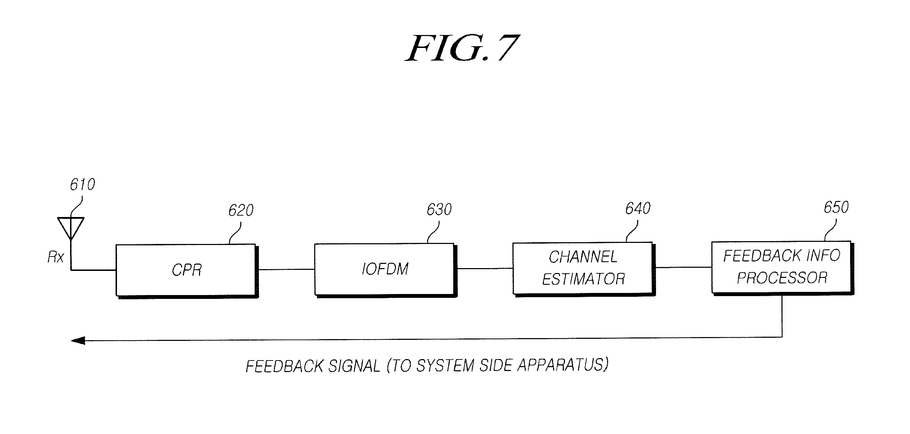

A configuration, in which the receiving apparatus calculates information on a particular frequency band which enables compensation for frequency attenuation, information on an antenna to be delayed, and an adaptive cyclic delay value, will be described in detail below with reference to FIG. 7.

The first function to the third function as described above may be performed by the base stations 411-1 to 411-3 included in the system side apparatus 410, or may be performed by a base station upper layer 412. According to circumstances, the first function to the third function may be cooperatively performed by each base station and a base station upper layer.

Specifically, the first function of receiving feedback information and channel response information on each base station by the system side apparatus 410 may be performed in the following process.

First, in a process of receiving channel response information, before a system side apparatus determines a coordinated base station set, a base station near a receiving apparatus receives information on each channel from a user equipment. Namely, the near base station receives a response to a reference signal that the near base station has transmitted to the receiving apparatus. Accordingly, the system side apparatus determines which base station has a good channel between it and the receiving apparatus which is the current target. Then, the system side apparatus determines which frequency band is to be used and which base station is to be selected in order to construct a coordinated base station set. This determination operation is performed by a system side apparatus in a conventional coordinated multi-point transmission/reception system.

Then, a process of receiving feedback information including an adaptive cyclic delay value according to an embodiment of the present invention may be performed as follows.

In a first method, when the system side apparatus 410 sends a request to the receiving apparatus 420, the receiving apparatus feeds a particular frequency band which enables compensation, information on an antenna to be delayed, and an adaptive cyclic delay value back to the system side apparatus, as a response to the request.

In a second method, without a request from the system side apparatus, the receiving apparatus periodically feeds information on a particular frequency band which enables compensation, information on an antenna to be delayed, and an adaptive cyclic delay value back to the system side apparatus.

In the first method, information does not need to be periodically transmitted. Therefore, as compared with the second method, the first method has advantages in that overhead can be reduced and the system side apparatus can make a request for an exactly desired frequency. As compared with the first method, the second method has an advantage in that it can benefit from the viewpoint of latency although overhead may be increased.

Also, the second function, where the system side apparatus determines a coordinated base station set after receiving feedback information from the receiving apparatus, will be described in detail. The second function may be performed by the system side apparatus in many methods as follows.

In a first method, the base station upper layer 412 or a base station on the system side may integratedly receive feedback information and channel response information that each base station has received from the receiving apparatus, and then may determine an optimal coordinated base station set based on the received feedback information and channel response information.

Besides the first method in which the base station upper layer or the base station determines the coordinated base station set all together, in a second method as described above, a serving base station, which currently serves a target receiving apparatus, may send, to a near base station, a request for a response as to whether the near base station enables coordinated multi-point transmission/reception between itself and the target receiving apparatus by using a frequency band which the serving base station currently allocates to the target receiving apparatus; and may include a base station, which transmits an OK response to the request, in a coordinated base station set. Finally, the serving base station may determine the coordinated base station set related to the relevant receiving apparatus.

Specifically, the second method may be implemented as a method in which when the serving base station sends, to the near base station, a request for a response as to whether the near base station enables coordinated multi-point transmission/reception, after the serving base station first requests, from the receiving apparatus, feedback information corresponding to the near base station from which the response is to be requested, the serving base station receives the response to the request and transmits the feedback information to the near base station. Otherwise, the second method may be implemented as another method in which when the receiving apparatus periodically transmits channel response information and feedback information on a near base station, the serving base station immediately transmits, to the relevant near base station, the feedback information corresponding to the relevant near base station, which the serving base station has already obtained before the serving base station sends, to the near base station, a request for a response without needing to again request information from the user equipment.

However, the first function and the second function do not need to be implemented by using the methods as described above, and may be implemented by using any other methods capable of receiving channel response information and feedback information on each base station from the receiving apparatus.

Then, the system side apparatus performs coordinated multi-point transmission/reception through the determined coordinated base station set. Specifically, the system side apparatus controls a base station, which does not require compensation for frequency attenuation according to an embodiment of the present invention, so as to transmit a signal in a general way. In contrast, the system side apparatus controls an antenna to be delayed in only a base station, which requires compensation for frequency attenuation among base stations included in the base station set, so as to transmit a signal delayed by an adaptive cyclic delay value.

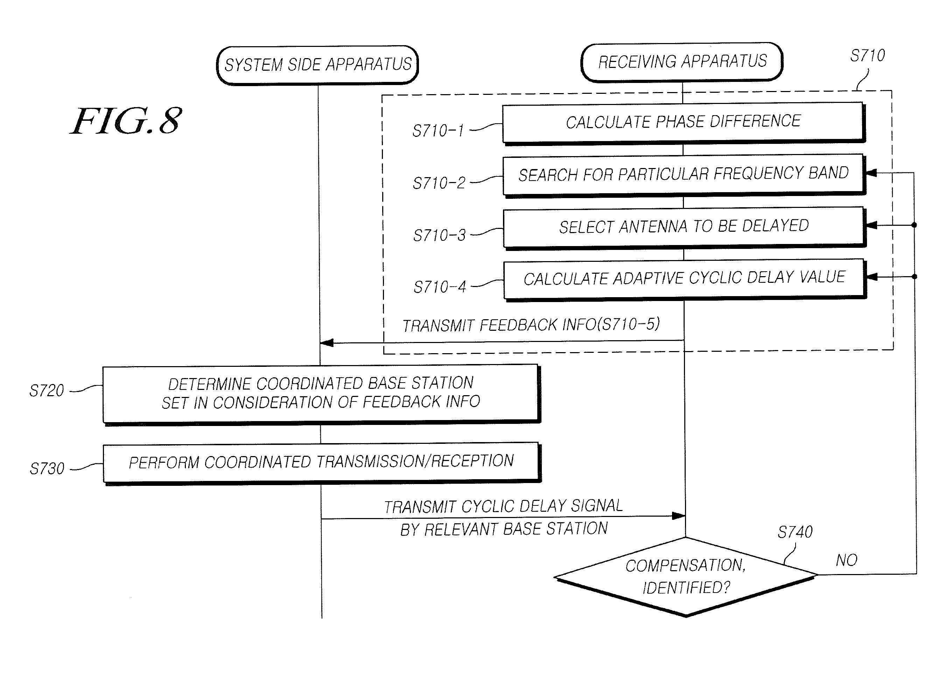

The transmission of a delay signal as described above will be additionally described below with reference to FIG. 8.

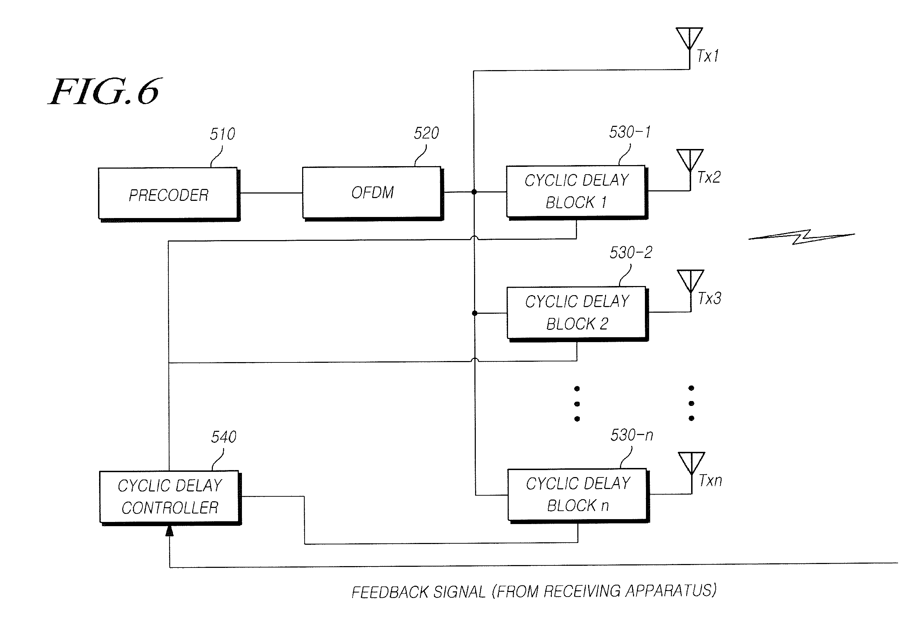

FIG. 6 is a block diagram illustrating a detailed configuration of a base station (a transmitting apparatus), which enables delayed transmission, included in a coordinated multi-point transmission/reception system according to an embodiment of the present invention.

Referring to FIG. 6, a base station according to an embodiment of the present invention includes a precoder 510, an Orthogonal Frequency Division Multiplexing (OFDM) modulator 520, an N number of antennas Tx1 to TxN arranged after the OFDM modulator, cyclic delay blocks 530-1 to 530-n capable of applying cyclic delay values to the remaining antennas excluding the first antenna Tx1, respectively, and a cyclic delay controller 540 capable of controlling all of the cyclic delay blocks.

The cyclic delay controller 540 according to an embodiment of the present invention performs a function of receiving information on an antenna to be delayed and an adaptive cyclic delay value related to the antenna which have been fed back from the receiving apparatus; and a function of controlling an antenna to be delayed in only a base station, which itself has been determined to be included in a coordinated base station set, so as to transmit a signal delayed by an adaptive cyclic delay value to the receiving apparatus. A detailed configuration of the cyclic delay controller 540 will be again described below with reference to FIG. 6 to FIG. 8.

Although the precoder 510 may include an FEC (Forward Error Correction) encoder, an interleaver, and a symbol mapper, the present invention is not limited to this configuration. Therefore, the precoder 510 should be understood as the concept of including all elements for processing signals before the modulation.

In this specification, although it is desirable that a base station (a transmitting apparatus) and a receiving apparatus correspond to a base station (or a node B, an eNode B, or the like) and a User Equipment (UE) in a downlink, respectively, the present invention is not limited to this configuration and roles of the elements may change in an uplink or the like. In an embodiment of the present invention, all apparatuses, which perform a function of calculating a phase difference between received signals and selecting a particular frequency band for compensating for attenuation, and calculating an adaptive cyclic delay value and transmitting the calculated adaptive cyclic delay value, will be commonly called "receiving apparatuses." Also, all apparatuses, which in order to perform coordinated multi-point transmission/reception, receive a fed-back feedback signal and perform signal delay transmission according to an adaptive cyclic delay value, will be commonly called "base stations."

FIG. 7 is a block diagram illustrating the configuration of a receiving apparatus according to an embodiment of the present invention.

Referring to FIG. 7, a receiving apparatus according to an embodiment of the present invention includes at least one antenna (Rx) 610, a Cyclic Prefix Remover (CPR) 620, an OFDM demodulator 630 for performing an Inverse Orthogonal Frequency Division Multiplexing (IOFDM) scheme, a channel estimator 640, and a feedback information processor 650.

The channel estimator 640 first estimates a channel by using a Reference Signal (RS) received through the antenna, and then detects channel conditions in each band. Because the channel conditions in each band change with time, the channel estimator 640 continuously estimates a channel by predetermined time periods by using a reference signal.

The feedback information processor 650 according to an embodiment of the present invention includes: a first section for estimating a reference signal transmitted by each antenna simultaneously with the estimation of a channel and calculating a phase difference between signals; a second section for searching for a particular frequency band which enables compensation for frequency attenuation through the correction of a phase difference; a third section for selecting an antenna to be delayed capable of compensating for frequency attenuation in a particular frequency band; a fourth section for calculating an adaptive cyclic delay value by using information on the particular found frequency band; and a fifth section for transmitting a feedback signal including the calculated adaptive cyclic delay value and information on the antenna to be delayed to the system side apparatus 410.

In this specification, a section has the concept of including all types of software or hardware configurations for performing a relevant function, and is not limited to a particular form of implementation. According to circumstances, the feedback information processor according to an embodiment of the present invention may be implemented as a separate element, or may be implemented by integrating the feedback information processor with another element such as the channel estimator or the like. Otherwise, the feedback information processor may operate in connection with a separate transmission antenna and the like in order to transmit a feedback signal.

The number of the antennas to be delayed as described above may be determined to be singular or plural. The second section selects, as the particular frequency band, a domain where an absolute value of a phase difference between signals transmitted by any two antennas is equal to or larger than a particular threshold and simultaneously, frequency attenuation is large.

The closer the particular threshold is to $\pi$ (3.4) or - $\pi$ (-3.14), the larger a compensation effect becomes. For example, it is desirable that the particular threshold has a value equal to or larger than 0.8 $\pi$.

However, the particular threshold does not need to be limited to a particular range, and may be appropriately determined to have a value (e.g. $6/7 \times \pi$, $5/6 \times \pi$, $3/4 \times \pi$, or the like) according to the degree of necessity of compensation for frequency attenuation.

Also, although a criterion of a domain where frequency attenuation is large, for example, may be a case when there occurs frequency attenuation, the value of which is equal to or smaller than -2 dB, or the like, the present invention is not limited to this example. The criterion may be variably set according to the characteristics of a channel intended to be used.

Also, the fourth section of the feedback information processor determines an adaptive cyclic delay value in such a manner as to minimize a phase difference between signals transmitted by an antenna to be delayed and a reference antenna in a particular selected frequency band. Specifically, it is desirable that adaptive cyclic delay value $\delta_{cyc,n}$ is determined by equation (1) below.

$$\delta_{cyc,n} = (2m\Pi + \Theta_k(d)) \times N_{FFT} / 2\Pi k \qquad \cdot \ \cdot \ \cdot \ \cdot \ \cdot \ \cdot \ (1)$$

In equation (1), n represents a number of an antenna to be delayed, k represents an index of a particular frequency band, $N_{FFT}$ represents the number of sub-carriers, $\Theta_k(d)$ represents a phase difference value for which compensation is desired, and m represents an optional integer.

Also, because adaptive cyclic delay value $\delta_{cyc,n}$ is a cyclic delay value, adaptive cyclic delay value $\delta_{cyc,n}$ is not determined as one value, and may be determined as multiple values by integer m as defined by equation (1). However, the larger adaptive cyclic delay value $\delta_{cyc,n}$ becomes, the larger the number of poles generated in a frequency response becomes, so that it becomes difficult to perform as significant a compensation for response attenuation in a particular frequency band as does the large delay CDD as described above. Therefore, an appropriately small value is selected from among obtained adaptive cyclic delay values $\delta_{cyc,n}$ Although it is desirable that integer m becomes zero and the smallest value among multiple adaptive cyclic delay value candidates is determined as an adaptive cyclic delay value, the present invention is not limited to this example.

In equation (1), a phase shift in band k caused by $\delta_{cyc,n}$ becomes phase difference value $\Theta_k(d)$ for which compensation is desired. Accordingly, it is desirable and ideal that phase difference value $\Theta_k(d)$ becomes π (3.14) or -π (-3.14) which is a phase difference which enables the most significant compensation. However, an actual phase difference between two antenna signals, which is to be used for the application of an actual compensation may not have the exact π (3.14) or -π (-3.14). In this case, an actual phase difference value between two antenna signals, which is to be used for the application of compensation, is determined as phase difference value $\Theta_k(d)$ for which compensation is desired.

Also, adaptive cyclic delay value $\delta_{cyc,n}$ is a sampled number, and thus must be an integer. In equation (1), when phase difference value $\Theta_k(d)$ for which compensation is desired becomes an actual phase difference value between two antenna signals, which is to be used for the application of compensation, there is a possibility that adaptive cyclic delay value $\delta_{cyc,n}$ will not become an integer. In this case, phase difference value $\Theta_k(d)$ for which compensation is desired, is a value which enables adaptive cyclic delay value $\delta_{cyc,n}$ to become an integer as defined by equation (1). Therefore, it is desirable that phase difference value $\Theta_k(d)$ for which compensation is desired, is determined as a closest value to an actual phase difference value between two antenna signals, which is used for the application of an actual compensation.

As described above, the feedback information processor generates a feedback signal including the calculated adaptive cyclic delay value and information on a selected antenna to be delayed, and transmits the generated feedback signal to the system side apparatus. At this time, only when the system side apparatus 410 makes a request for transmission, the feedback information processor may transmit the feedback signal. Otherwise, the feedback information processor may periodically transmit feedback information to the system side apparatus without a special request.

Next, only when the system side apparatus compensates for frequency attenuation, the cyclic delay controller 540 of a base station which may be included in a coordinated base station set controls a cyclic delay block of a relevant antenna to be delayed, so as to cause the antenna to be delayed to transmit a signal (which is to be represented by equation (3) below) delayed by an adaptive cyclic delay value as compared with a reference antenna signal.

In this specification, the receiving apparatus may be a User Equipment (UE), and such a UE has a comprehensive concept implying a user terminal in wireless communication as described above. Accordingly, it should be analyzed that UEs have the concept of including an MS (Mobile Station), a UT (User Terminal), an SS (Subscriber Station), a wireless device, and the like in GSM (Global System for Mobile Communications) as well as UEs (User Equipments) in WCDMA (Wideband Code Division Multiple Access), LTE (Long Term Evolution), HSPA (High Speed Packet Access), etc.

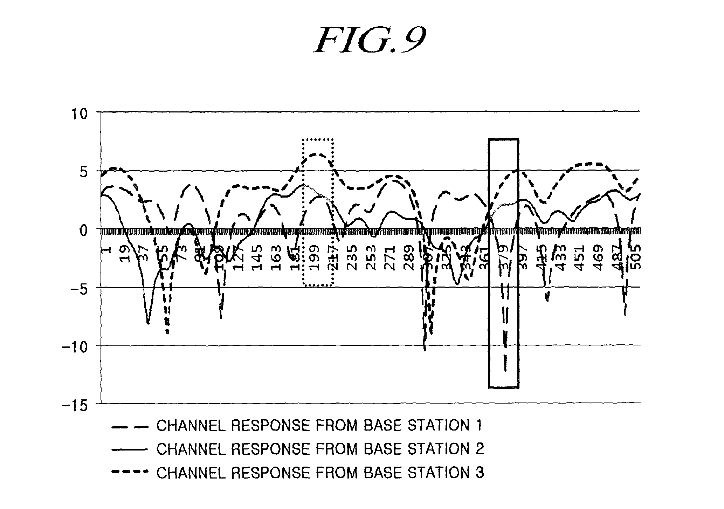

FIG. 8 is a flowchart illustrating a coordinated transmitting/receiving method using a coordinated multi-point transmission/reception system according to an embodiment of the present invention. FIG. 9 to FIG. 12 are views illustrating changes in channel response characteristics, respectively, when an embodiment of the present invention is applied to a multi-antenna system.

Referring to FIG. 8, the receiving apparatus according to an embodiment of the present invention, more specifically, the feedback information processor 650 of the receiving apparatus calculates feedback information including an adaptive cyclic delay value and information on an antenna to be delayed, and transmits the calculated feedback information to the system side apparatus 410 (S710).

Specifically, step S710 may include: step S710-1 of calculating a phase difference between signals by estimating a reference signal transmitted by each antenna; step S710-2 of searching for a particular frequency band which enables compensation for frequency attenuation through the correction of a phase difference; step S710-3 of selecting an antenna to be delayed capable of compensating for frequency attenuation in a particular frequency band; step S710-4 of calculating an adaptive cyclic delay value by using the particular found frequency band and the estimated reference signal; and step S710-5 of transmitting feedback information including the calculated adaptive cyclic delay value and information on the antenna to be delayed to the system side apparatus.

Also, in step S710, the receiving apparatus transmits channel response information on multiple near base stations to the system side apparatus.

The system side apparatus 410 determines a coordinated base station set which enables coordinated multi-point transmission/reception between the coordinated base station set and the relevant receiving apparatus by using the received feedback information corresponding to each base station and channel response information (S720).

Then, the system side apparatus 410 performs coordinated multi-point transmission/reception through the determined coordinated base station set (S730).

Specifically, in step S730, a control operation is performed so that a base station, which does not require compensation for frequency attenuation according to an embodiment of the present invention, transmits a signal in a general coordinated transmission/reception way. In contrast, a control operation is performed so that an antenna to be delayed in only a base station, which requires compensation for frequency attenuation among base stations included in the base station set, transmits a signal delayed by an adaptive cyclic delay value.

Therefore, compensation for frequency attenuation in a particular frequency band enables a conventional base station, which has poor characteristics of a channel in the relevant frequency band and thus may not be used as a coordinated base station, to be used as a coordinated multi-point base station.

Meanwhile, the operation of the feedback information processor of the receiving apparatus may additionally include step S740 of identifying whether compensation for frequency attenuation in a particular frequency band has been performed on a signal transmitted by a relevant base station through the process as described above. When the compensation has been appropriately performed, the feedback information processor waits for the next application cycle. On the other hand, when the compensation has not been appropriately performed, it may be configured that the feedback information processor returns to one step among step S710-2 of searching for a particular frequency band, step S710-3 of selecting an antenna to be delayed, and step S710-4 of calculating an adaptive cyclic delay value.

At this time, when the compensation is not completed, whether the receiving apparatus returns to any one step may be determined in consideration of surrounding environments, such as the moving speed of the terminal (receiving apparatus), channel conditions, and frequency distortion.

As described above in relation to the receiving apparatus, the feedback information processor 650 selects a domain, where a phase difference between signals transmitted by any two antennas has a value close to $\pi$ (3.14) or -$\pi$ (-3.14) and simultaneously, frequency attenuation is large, as the particular frequency band in step S710-2 of searching for a particular frequency band and step S710-3 of selecting an antenna to be delayed. Then, the feedback information processor 650 selects an antenna, which generates such a phase difference, as an antenna to be delayed.

Hereinafter, the effects of the coordinated multi-point transmission/reception system according to an embodiment of the present invention will be described with reference to FIG. 9.

FIG. 9 illustrates channel responses received from three near base stations, and a channel response for each base station obtained by analyzing reference signals that an optional user equipment has received from the three near base stations. In the coordinated multi-point transmission/reception system, when channel states of near base stations are all good and the three base stations all show good channel performances as in a band (near k = 199) shown in a dotted line, without special problems, all of the three base stations are first selected as a coordinated base station set, and then coordinated transmission/reception is performed through the selected coordinated base station set. However, a base station 1, which is one of the three base stations, has a poor channel performance as in a frequency band (near k = 385) shown in a solid line. In this case, in the conventional coordinated multi-point system, the base station 1, which has a poor channel performance as compared with an appropriate criterion, is not included in a coordinated base station set.

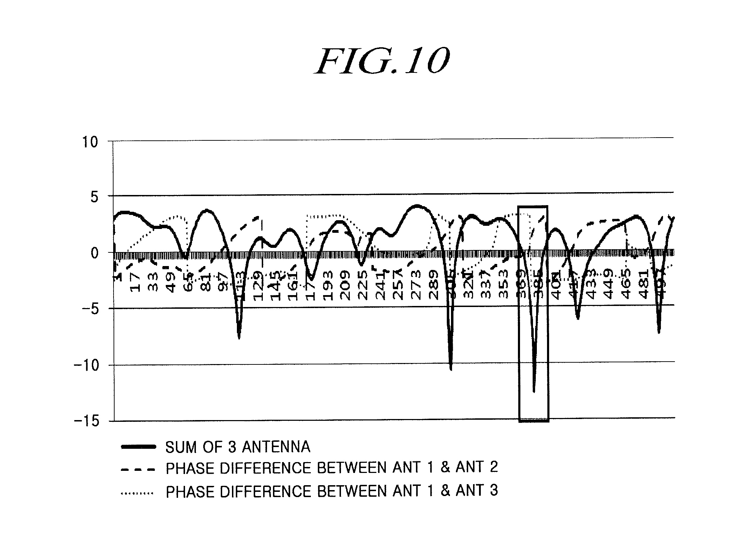

FIG. 10 illustrates a phase difference between signals received by antenna 1, antenna 2 and antenna 3 of the base station 1 together with the sum (shown in a solid line) of signals received by antenna 1, antenna 2 and antenna 3.

Referring to FIG. 10, near k = 385, a large frequency attenuation is generated and simultaneously, a phase difference between antenna 1 and antenna 3 comes close to $\pi$ (3.14). Accordingly, the feedback information processor of the receiving apparatus determines this frequency band as a particular frequency band which enables compensation, and selects antenna 3, which has generated such a phase difference with reference to a reference antenna, as an antenna to be delayed.

Then, the feedback information processor of the receiving apparatus calculates an adaptive cyclic delay value by equation (1) as described above in step S710-4 of calculating an adaptive cyclic delay value.

In equation (1), n represents a number of an antenna to be delayed, k represents an index of a particular frequency band, $N_{FFT}$ represents the number of sub-carriers, $\Theta_k(d)$ represents a phase difference value for which compensation is desired, and m represents an optional integer.

Namely, in FIG. 10 as an example, index k representing a particular frequency band which requires compensation is 385, an antenna to be delayed is antenna 3 (i.e. n = 3), a phase difference for which compensation is required (a phase difference value for which compensation is desired) is approximately π (3.14). When the number $N_{FFT}$ of sub-carriers is 512, adaptive cyclic delay value $\delta_{cyc,n}$ is determined as 2 for m = 1 as defined by equation (4) below. At this time, a final phase difference value $\Theta_k(d)$ for which compensation is desired, becomes 3.16 (1.0078π).

Then, the feedback information processor of the receiving apparatus generates a feedback signal including the calculated adaptive cyclic delay value ($\delta_{cyc,n}$ = 2) and information on an antenna to be delayed (n = 3), and transmits the generated feedback signal to the system side apparatus 410.

After identifying channel response information (shown in FIG. 9) and a feedback signal on each of the base station 1, the base station 2 and the base station 3, the system side apparatus includes all of the base station 1, the base station 2 and the base station 3 in a coordinated base station set, in order to use a frequency band near k = 385 as a coordinated transmission/reception frequency band of the relevant receiving apparatus. Then, the system side apparatus controls the base station 1 so as to transmit a signal delayed by an adaptive cyclic delay value as follows.

The relevant base station 1 transmits a signal delayed by the adaptive cyclic delay value through the antenna to be delayed by using the received adaptive cyclic delay value ($\delta_{cyc,n}$ = 2) and information on the antenna to be delayed (n = 3). At this time, a reference signal transmitted by the base station 1 and the signal delayed by adaptive cyclic delay value $\delta_{cyc,n}$ may be expressed by equation (2) below and equation (3) below, respectively.

$$s(l) = \frac{1}{\sqrt{N_{FFT}}} \sum_{k=0}^{N_{FFT}-1} S(k) e^{j\frac{2\pi}{N_{FFT}}kl} \qquad \cdots \cdots (2)$$

$$s\left((l - \delta_{cyc,n}) \bmod N_{FFT}\right) = \frac{1}{\sqrt{N_{FFT}}} \sum_{k=0}^{N_{FFT}-1} e^{-j\frac{2\pi}{N_{FFT}}k\delta_{cyc,n}} S(k) e^{j\frac{2\pi}{N_{FFT}}kl}$$

$$\cdots \cdots (3)$$

In equation (2) and equation 3, $s(l)$ and S(k) represent a complex number signal on the time axis and a complex number signal on the frequency axis, respectively. k and $l$ represent an index on the time axis and an index on the frequency axis, respectively, n represents a number of an antenna to be delayed, k represents an index of a particular frequency band, and $N_{FFT}$ represents the number of sub-carriers.

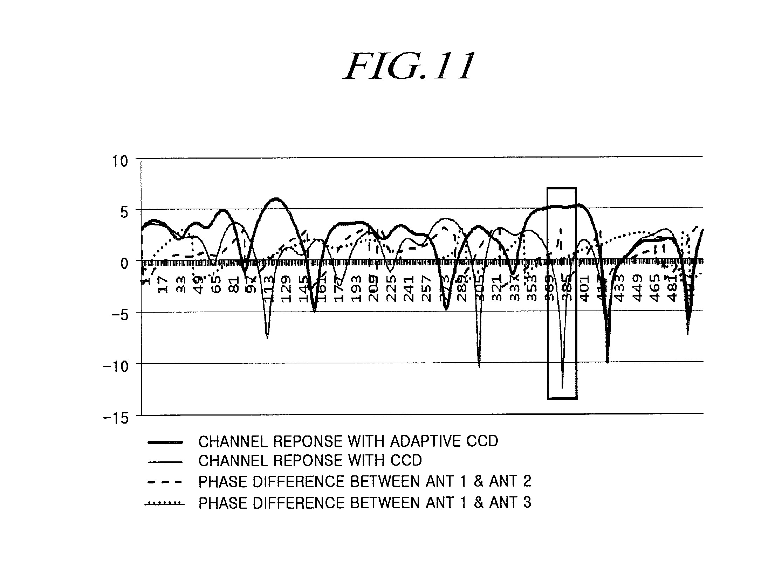

FIG. 11 illustrates frequency response characteristics at a reception end when the relevant base station 1 applies an adaptive cyclic delay value to antenna 3 through the process as described above and transmits a signal delayed by the adaptive cyclic delay value through antenna 3. When compared with FIG. 10 obtained without the application of an embodiment of the present invention, it can be seen that frequency response characteristics of the base station 1 near k = 385, which is a particular frequency band, were dramatically improved.

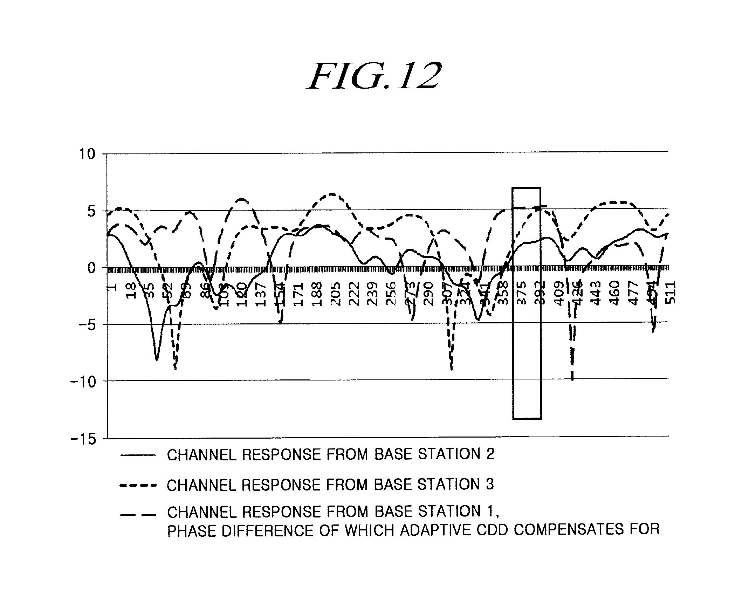

FIG. 12 simultaneously illustrates a channel response between the base station 1, which an adaptive cyclic delay according to an embodiment of the present invention compensated for the degradation of channel performance, and a user equipment, a channel response between the existing base station 2 and the user equipment, and a channel response between the base station 3 and the user equipment.

Referring to FIG. 12, frequency response characteristics of the base station 1 in a frequency band near k = 385 are improved. Accordingly, the base station 1 which, conventionally, could not be included in a coordinated set, may be included in a coordinated base station set for coordinated multi-point transmission/reception, so that it is possible to support the relevant receiving apparatus in order to provide a coordinated multi-point transmission/reception service to the relevant receiving apparatus.

Meanwhile, according to an embodiment of the present invention, when a particular selected frequency band is a low frequency band (i.e. a frequency band having a low k), an adaptive cyclic delay value calculated by equation (1) as described above becomes larger. In this case, as described above, an operation similar to an operation in the large delay CDD is performed. Therefore, there is a possibility that the compensation for frequency attenuation according to an embodiment of the present invention will not be performed over a sufficient frequency band.

Namely, when an adaptive cyclic delay is performed in the frequency band having a low k, an excessive number of poles are generated as shown in FIG. 4. Accordingly, although the method for compensating for frequency attenuation as described above is performed, it is difficult to perform a significant compensation for frequency attenuation within a desired frequency bandwidth.

When a particular desired frequency band is a low frequency band as described above, a precoding scheme may be additionally applied to the particular desired frequency band. Here, although a low frequency band, to which the precoding is applied, specifically signifies a frequency band having k equal to or smaller than $N_{FFT}/4$, the present invention is not limited to this example. The low frequency band, to which the precoding is applied, may be determined as another value based on the number of poles generated by the application of a cyclic delay, the width of a frequency band which requires compensation, etc.

Namely, when a particular frequency band, which requires compensation, includes a low frequency band, the relevant base station may additionally perform a precoding step of multiplying a first transmission signal by a particular precoding matrix. Although it is desirable that such a precoding step is performed before the transmission of a cyclic delay signal, the present invention is not limited to this configuration.

A precoding technology refers to a technology for increasing the reliability of the transmission of data in a multi-antenna OFDM system, etc., and is used to maximize a Signal to Noise Ratio (SNR) through the relevant feedback information in a closed loop system capable of using feedback information at a transmission end.

Particularly, a codebook-based precoding scheme may be used for the precoding technology, and is a scheme for obtaining an SNR gain by feeding an index of a precoding matrix, which a transmission/reception end already knows, back to a transmission end. In an embodiment of the present invention, when a particular selected frequency band is a low frequency band, the receiving apparatus feeds an index of an optimal precoding matrix among common precoding matrices, which the transmission/reception end has, back to a base station by using channel information. Then, the base station applies the precoding matrix corresponding to the fed-back index to a transmission signal.

Also, it is not true that only precoding in a closed loop can be used for the precoding technology. When a base station already knows an optimal precoding matrix for a particular frequency band or for the entire frequency band, the above precoding function may be performed without feedback information.

By doing this, when a desired particular frequency band includes a low frequency band, in the low frequency band, a desired improvement in gain is obtained by using the precoding technology. In the remaining frequency band, an adaptive cyclic delay scheme according to an embodiment of the present invention compensates for frequency attenuation, so as to enable an improvement in frequency selectivity of the entire frequency band.

Although the above description has been made of an example of the 3X1 multi-antenna system, the technical idea of the present invention may be applied to a N X M multi-antenna system. In the above description, although the adaptive cyclic delay according to an embodiment of the present invention is applied only to antenna 3, the adaptive cyclic delay may be simultaneously or sequentially applied to another additional antenna or multiple antennas.

The present invention is not limited to the wireless communication field of the 3GPP (the 3rd Generation Partnership Project) series. The present invention will be able to be used in all fields, which require efficient coordinated multi-point transmission/reception, by increasing frequency selectivity all through the channel and by improving response characteristics in a particular frequency band in a multi-antenna system of another current communication field or in a multi-antenna system based on a future communication technology.

As described above, according to an embodiment of the present invention, an improvement in the channel performance of a particular base station in a particular frequency band increases the possibility of securing base stations which can be included in a coordinated set. Also, even when another user has already pre-occupied frequency resources which enable a coordinated transmission/reception service, by causing another frequency resource to be available without delay, it is possible to increase the possibility of enabling the start of a coordinated transmission/reception service.

Among the above described advantages, a detailed description will be made below of the effect of causing another frequency resource to be available without delay even when another user has already pre-occupied frequency resources which enable a coordinated transmission/reception service.

Referring to FIG. 9, in a frequency band shown in a dotted line box (near k = 199), by selecting the three base stations from among multiple base stations as a coordinated set, it is possible to start a coordinated service for a relevant user. However, there may be a case where the selected frequency band is pre-occupied by some or all base stations which already construct a coordinated set and is being used by another user. In this case, in the existing schemes, it is possible to go through a process of waiting until the pre-occupied frequency resources become available frequency resources or a process of again receiving feedback information and again selecting a possible frequency band.

After going through the process as described above, it is possible to meet a latency problem which is the most important issue discussed in the coordinated multi-point transmission/reception system. In this case, by using the adaptive cyclic delay proposed by an embodiment of the present invention, a frequency band at a part shown in a solid line box may be selected as a frequency band, which supports a coordinated service, instead of a previously selected frequency band shown in a dotted line box.

Also, although the frequency band at the solid line part is not selected, a search may first be made of a frequency band which can be used from the viewpoint of the technology of adaptive cyclic delay, and then the technology of adaptive cyclic delay may be applied to the found frequency band. Therefore, there is a possibility that any frequency band will be available, and it is possible to solve a latency problem caused by other additional processes including the re-selection of a frequency band and the like when the problem of preoccupying frequencies occurs.

Industrial Applicability

As described above, in an embodiment of the present invention, it is possible to increase the possibility of securing base stations which can be included in a coordinated set, by improving the channel performance of a particular base station in a particular frequency band, which requires coordinated multi-point transmission/reception, by using an adaptive cyclic delay. Also, it is possible to increase the possibility of causing another frequency resource to be available without delay and enabling the start of a coordinated transmission/reception service even when another user has already pre-occupied a frequency resource which enables the coordinated transmission/reception service. Therefore, the present invention is very useful.

Although several exemplary embodiments of the present invention have been described for illustrative purposes, those skilled in the art will appreciate that various modifications, additions and substitutions are possible, without departing from the scope and spirit of the invention as disclosed in the accompanying claims.

CROSS-REFERENCE TO RELATED APPLICATION

This application claims priority from and the benefit under 35 U.S.C. §119(a) of Korean Patent Application No. 10-2009-0056709, filed on June 24, 2009, which is hereby incorporated by reference for all purposes as if fully set forth herein. In addition, this application claims priority in countries, other than the U.S., with the same reason based on the Korean Patent Application, which is hereby incorporated by reference for all purposes as if fully set forth herein.

**Claims**

1. A coordinated multi-point transmission/reception system apparatus as a system apparatus including at least one base station including a multi-transmission antenna in a coordinated multi-point transmission/reception system, the coordinated multi-point transmission/reception system apparatus comprising:

    a first section for receiving information on a particular frequency band in which adaptive cyclic delay transmission of each base station enables compensation for frequency attenuation and, feedback information including information on an antenna to be delayed and an adaptive cyclic delay value, and channel response information on each base station from a receiving apparatus;
    a second section for determining a coordinated base station set, which enables coordinated multi-point transmission/reception between the coordinated base station set and the receiving apparatus, based on one or more of the feedback information and channel response information on each base station; and
    a third section for controlling the antenna to be delayed in only an optional base station, which requires the compensation for the frequency attenuation among base stations included in the coordinated base station set, so as to transmit a signal delayed by the adaptive cyclic delay value.

2. The coordinated multi-point transmission/reception system apparatus as claimed in claim 1, wherein the first section sends, to the receiving apparatus, a request for transmitting the feedback information, and receives feedback information calculated by the receiving apparatus as a response to the request for transmitting the feedback information.

3. The coordinated multi-point transmission/reception system apparatus as claimed in claim 1, wherein the first section receives feedback information periodically transmitted by the receiving apparatus.

4. The coordinated multi-point transmission/reception system apparatus as claimed in claim 1, wherein the system apparatus corresponds to a base station upper layer or a base station, and the second section determines the coordinated base station set based on the received feedback information and channel response information after the second section integratedly receives, from each base station, the feedback information and the channel response information that each base station has received from the receiving apparatus.

5. The coordinated multi-point transmission/reception system apparatus as claimed in claim 1, wherein the system apparatus corresponds to a serving base station serving the receiving apparatus, and the second section sends, to a near base station, a request for a response as to whether the near base station enables coordinated multi-point transmission/reception between the near base station and the receiving apparatus by using a frequency band currently allocated to the receiving apparatus; and includes a base station, which transmits an OK response to the request, in the coordinated base station set and determines the coordinated base station set related to the receiving apparatus.

6. The coordinated multi-point transmission/reception system apparatus as claimed in claim 1, wherein when the particular frequency band includes a low frequency band, the base station, which requires the compensation for the frequency attenuation, additionally performs a precoding where a first transmission signal is multiplied by a particular precoding matrix and the first transmission signal multiplied by the particular precoding matrix is transmitted.

7. The coordinated multi-point transmission/reception system apparatus as claimed in claim 6, wherein a frequency band, to which the precoding is applied, corresponds to a frequency band which is equal to or smaller than the number ($N_{FFT}$) of sub-carriers/4.

8. The coordinated multi-point transmission/reception system apparatus as claimed in claim 1, wherein the particular frequency band enabling the compensation for the frequency attenuation corresponds to a domain where an absolute value of a phase difference between signals transmitted by any two antennas is equal to or larger than a particular threshold and simultaneously, frequency attenuation is large.

9. The coordinated multi-point transmission/reception system apparatus as claimed in claim 1, wherein, in the particular frequency band, the adaptive cyclic delay value is determined in such a manner as to minimize a phase difference between signals transmitted by any two antennas including the antenna to be delayed.

10. The coordinated multi-point transmission/reception system apparatus as claimed in claim 1, wherein the adaptive cyclic delay value($\delta_{cyc,n}$) is defined by

$$\delta_{cyc,n} = (2m\Pi + \Theta_k(d)) \times N_{FFT} / 2\Pi k \, ,$$

wherein n represents a number of the antenna to be delayed, k represents an index of a particular frequency band, $N_{FFT}$ represents the number of sub-carriers, $\Theta_k(d)$ represents a phase difference value for which compensation is desired, and m represents an optional integer.

11. The coordinated multi-point transmission/reception system apparatus as claimed in claim 10, wherein multiple adaptive cyclic delay value candidates are generated according to the m, and the smallest value among the multiple generated adaptive cyclic delay value candidates is determined as an adaptive cyclic delay value.

12. The coordinated multi-point transmission/reception system apparatus as claimed in claim 10, wherein the phase difference value ($\Theta_k(d)$) for which compensation is desired, is equal to a value of a phase difference of received signals between the antenna to be delayed and a reference antenna or corresponds to a value which enables the adaptive cyclic delay value ($\delta_{cyc,n}$) to become an integer, and corresponds to a closest value to the phase difference of the received signals between the antenna to be delayed and the reference antenna.

13. A receiving apparatus for a coordinated multi-point transmission/reception system as a receiving apparatus communicating with multiple base stations including a multi-transmission antenna in the coordinated multi-point transmission/reception system, the receiving apparatus comprising:

a feedback information processor for calculating information on a particular frequency band in which cyclic delay transmission of one or more base stations enables compensation for frequency attenuation and, feedback information including information on an antenna to be delayed and an adaptive cyclic delay value, and channel response information on each base station, and feeding the calculated information on the particular frequency band, feedback information, and channel response information back to the system side; and
a transmission/reception unit for receiving a signal to be delayed by the adaptive cyclic delay value transmitted through an antenna to be delayed in a base station requiring the compensation for the frequency attenuation among base stations included in a coordinated base station set, which enable coordinated multi-point transmission/reception, determined by the system side.

14. The receiving apparatus as claimed in claim 13, wherein, after the feedback information processor receives a request for transmitting feedback information sent by the system side, the feedback information processor transmits the feedback information as a response to the request.

15. The receiving apparatus as claimed in claim 13, wherein the feedback information processor periodically transmits the feedback information.

16. A coordinated multi-point transmitting/receiving method by a system in the system including multiple base stations including a multi-transmission antenna, the coordinated multi-point transmitting/receiving method comprising:

receiving information on a particular frequency band in which adaptive cyclic delay transmission of one or more base stations enables compensation for frequency attenuation and, feedback information including information on an antenna to be delayed and an adaptive cyclic delay value, and channel response information on each base station from a receiving apparatus;
determining a coordinated base station set, which enables coordinated multi-point transmission/reception, based on the channel response information and the feedback information; and
controlling the antenna to be delayed in only a base station, which requires the compensation for the frequency attenuation among base stations included in the base station set, so as to transmit a signal delayed by the adaptive cyclic delay value.

17. A coordinated multi-point transmitting/receiving method by a receiving apparatus in a system including multiple base stations including a multi-transmission antenna, the coordinated multi-point transmitting/receiving method comprising:

calculating information on a particular frequency band in which cyclic delay transmission of one or more base stations enables compensation for frequency attenuation and, feedback information including information on an antenna to be delayed and an adaptive cyclic delay value, and channel response information on each base station, and feeding the calculated information on the particular frequency band, feedback information, and channel response information back to the system side; and
receiving a signal to be delayed by the adaptive cyclic delay value transmitted through an antenna to be delayed in a base station requiring the compensation for the frequency attenuation among base stations included in a coordinated base station set, which enable coordinated multi-point transmission/reception, determined by the system side.

18. A method for determining a coordinated multi-point base station set by a system side apparatus including multiple base stations including a multi-transmission antenna and communicating with a receiving apparatus, the method comprising:

determining, by the system side, a coordinated base station set, which enables coordinated multi-point transmission/reception among the multiple base stations, in consideration of an adaptive cyclic delay value for each base station fed back from the receiving apparatus.

FIG.1

# FIG.2

## FIG.3

3 X 1 CHANNEL FREQUENCY RESPONSE

# FIG.4

*FIG.5*

EP 2 448 142 A2

412

BASE STATION
UPPER LAYER

411-1

BASE STATION 1

411-2

BASE STATION 2

· · ·

411-3

BASE STATION n

420

RECEIVING
APPARATUS

# FIG.6

# FIG.7

Rx → 610

620 CPR — 630 IOFDM — 640 CHANNEL ESTIMATOR — 650 FEEDBACK INFO PROCESSOR

FEEDBACK SIGNAL (TO SYSTEM SIDE APPARATUS)

EP 2 448 142 A2

EP 2 448 142 A2

*FIG.8*

SYSTEM SIDE APPARATUS          RECEIVING APPARATUS          S710

S710-1 — CALCULATE PHASE DIFFERENCE

S710-2 — SEARCH FOR PARTICULAR FREQUENCY BAND

S710-3 — SELECT ANTENNA TO BE DELAYED

S710-4 — CALCULATE ADAPTIVE CYCLIC DELAY VALUE

TRANSMIT FEEDBACK INFO(S710-5)

S720 — DETERMINE COORDINATED BASE STATION
SET IN CONSIDERATION OF FEEDBACK INFO

S730 — PERFORM COORDINATED TRANSMISSION/RECEPTION

TRANSMIT CYCLIC DELAY SIGNAL
BY RELEVANT BASE STATION

S740

COMPENSATION,
IDENTIFIED?          NO

# FIG.9

- — CHANNEL RESPONSE FROM BASE STATION 1
—— CHANNEL RESPONSE FROM BASE STATION 2
- - - - CHANNEL RESPONSE FROM BASE STATION 3

# FIG.10

SUM OF 3 ANTENNA
- - - PHASE DIFFERENCE BETWEEN ANT 1 & ANT 2
·········· PHASE DIFFERENCE BETWEEN ANT 1 & ANT 3

EP 2 448 142 A2

*FIG.11*

CHANNEL REPONSE WITH ADAPTIVE CCD
CHANNEL REPONSE WITH CCD
PHASE DIFFERENCE BETWEEN ANT 1 & ANT 2
PHASE DIFFERENCE BETWEEN ANT 1 & ANT 3

## FIG.12

—————— CHANNEL RESPONSE FROM BASE STATION 2

━ ━ ━ ━ CHANNEL RESPONSE FROM BASE STATION 3

— — CHANNEL RESPONSE FROM BASE STATION 1,
PHASE DIFFERENCE OF WHICH ADAPTIVE CDD COMPENSATES FOR

EP 2 448 142 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090056709